# EUROPÄISCHE PATENTSCHRIFT

(11) **EP 2 353 149 B1**
(45) Veröffentlichungstag und Bekanntmachung des Hinweises auf die Patenterteilung: **19.06.2019**
(21) Anmeldenummer: 09744068.9
(22) Anmeldetag: 20.10.2009
(51) Int. Cl.: G07F 7/06, B07C 5/12, B65G 47/14

(54) **VERFAHREN UND TRANSPORTEINRICHTUNG ZUR RÜCKNAHME VON LEERGUT, INSBESONDERE VON FLASCHEN UND DOSEN**
METHOD AND CONVEYOR DEVICE FOR RETURNING EMPTIES, IN PARTICULAR BOTTLES AND CANS
PROCÉDÉ ET INSTALLATION DE TRANSPORT POUR LE RECYCLAGE D'EMBALLAGES VIDES EN RETOUR, EN PARTICULIER DE BOUTEILLES ET DE BOÎTES

(30) Priorität: 20.10.2008 DE 102008052330
(43) Veröffentlichungstag der Anmeldung: 10.08.2011
(73) Patentinhaber: Envipco Holding N.V., 1015 DE Amsterdam (NL)
(72) Erfinder: HANDSCHICK, Bert, 02785 Obersdorf (DE); LÖNING, Johann, 26122 Oldenburg (DE)
(74) Vertreter: Seewald, Jürgen
(86) Internationale Anmeldenummer: PCT/EP2009/007507
(87) Internationale Veröffentlichungsnummer: WO 2010/046085

(56) Entgegenhaltungen:
- EP-A- 2 105 891
- WO-A-00/63853
- WO-A1-02/12095
- WO-A2-2007/133063
- CA-A1- 948 142
- DE-A1- 2 254 791
- DE-B3-102007 013 204
- US-A- 3 331 486
- US-A- 3 715 024
- US-A- 5 078 258
- US-B1- 6 691 854

## Beschreibung

Die vorliegende Erfindung betrifft eine Transporteinrichtung zur Rücknahme von Leergut, insbesondere von Flaschen und Dosen gemäß dem Oberbegriff des Anspruchs 1.

Derartige Transporteinrichtungen kommen in Leergut-Rücknahmevorrichtungen zum Einsatz. Mit Hilfe dieser Automaten werden Einweg- und Mehrweg-Container in Form von Flaschen und Dosen zurückgenommen. Es wird dabei zwischen Einzel-Einzugssystemen und Bulk-Einzugsystemen unterschieden.

Ein Beispiel für einen Leergut-Rücknahmeautomaten mit Einzel-Einzugsystem ist in der WO 02/12095 A1 zu finden. Bei derartigen Automaten werden die Container seriell nacheinander von Hand eingegeben und dann durch eine Transporteinrichtung seriell, d. h. in einer Reihe, einzeln nacheinander, an einer Erkennungseinheit vorbeigeführt, durch die die Container auf Form, Beschaffenheit, Unversehrtheit sowie Barcodes oder Sonderzeichen überprüft werden.

Die DE 10 2007 013 204 B3 betrifft eine Transporteinrichtung für Rücknahme-Automaten von leeren Getränkebehältern, bei der die Behälter ebenfalls einzeln nacheinander auf ein Förderband gelegt werden, wo sie durch Schwenken des Förderbandes zeitweilig mit einer Antriebsanordnung in Kontakt gebracht und in Drehung versetzt werden, so dass Merkmale von ihrer Oberfläche abgefragt werden können. Auch hier erfolgt also die Eingabe und Abfrage seriell.

Leergut-Rücknahmeautomaten mit Bulk-Einzugsystem sind in der DE 10 2005 025 965 A1, der DE 10 2004 010 133 A1 und der DE 103 35 188 A1 beschrieben. Bei diesen Automaten wird zurück zu gebendes Leergut nicht einzeln, d. h. Stück für Stück eingegeben, sondern in einer Masse (Bulk), d. h. so zu sagen als Schüttgut. Die Eingabe erfolgt in einen Eingaberaum, aus dem das Leergut durch die Transporteinrichtung heraus transportiert wird. Bei den Automaten nach dem Stand der Technik erfolgt aus dem Eingabeort heraus eine serielle Vereinzelung des Leerguts.

Die oben kurz beschriebenen Bulk-Einzugsysteme haben den Vorteil, dass die Eingabe des Leerguts in den Automaten für den Benutzer schnell und unproblematisch erfolgt. Nachteilig ist jedoch, dass der Durchsatz durch den Automaten aufgrund der seriellen Vereinzelung trotz teilweise hoher Einzeltransportgeschwindigkeiten viel Zeit in Anspruch nimmt, so dass der Kunde relativ lange auf den Ausdruck eines Pfandbons warten muss.

Die US 6 691 854 betrifft eine Sortiervorrichtung für Obst, z. B. Äpfel oder Birnen, die in einer Transportkette in einer Reihe hintereinander angebracht werden und in mehreren aufeinander folgenden Stationen nacheinander in verschiedenen Richtungen unter Beobachtung von Kameras so lange gedreht werden, bis alle Stiele in die gleiche Richtung oder alle Blüten nach oben weisen, um in einer für den Kunden attraktiven Weise in Verkaufsbehältern abgelegt zu werden. Hier besteht nicht das Problem einer Wartezeit bis zur Beendigung des Sortiervorgangs.

Das gleiche gilt auch für die in der WO 2007/133063 beschriebene Vorrichtung, bei der in einer Kette durch Saugnäpfe an Fäden aufgehängte Eier an einer Prüfvorrichtung unter Drehung vorbeigeführt und auf das Vorhandensein von Sprüngen geprüft werden.

Dokument US 3,331,486 offenbart eine Vorrichtung zum Transport von Flaschen, die als Schüttgut in einen Eingabebereich gelangen und mittels eines Förderbandes, welches Mitnehmer umfasst, in Feldanordnung aus diesem Eingabebereich hinaustransportiert werden.

Aufgabe der Erfindung ist es daher, eine Transporteinrichtung für Automaten zur Rüxcknahme von aus Flaschen und Dosen bestehendem Leergut mit einer erhöhten Durchsatzleistung zur Verfügung zu stellen.

Diese Aufgabe wird erfindungsgemäß mit einer Transporteinrichtung gemäß Anspruch 1 gelöst.

Erfindungsgemäß erfolgt also der Abtransport des Leerguts aus dem Eingaberaum parallelisiert, wodurch es der Erkennungseinheit in einer Feldanordnung zugeführt wird. Feldanordnung soll bedeuten, dass das Leergut auf der Transporteinrichtung in Förderrichtung gesehen nicht nur der Reihe nach übereinander bzw. hintereinander, sondern gleichzeitig auch nebeneinander angeordnet ist. Zur Realisierung dieser Verfahrensweise sind die Mitnehmer der Transporteinrichtung so breit ausgeführt, dass sie mindestens zwei Stücke Leergut nebeneinander aufnehmen können, wobei das Leergut zumindest im Detektionsfeld der Erkennungseinheit in jeder durch die Mitnehmer gebildeten Förderebene einen Drehimpuls erhält, so dass sich das Leergut um seine Längsachse dreht bei gleichzeitiger translatorischer Förderung. Die Drehbewegung um die Längsachse ist wie beim Einzel-Einzugsystem erforderlich, um auf der Mantelfläche des Leerguts vorhandene Zeichen etc. durch die Erkennungseinheit erfassen zu können. Aufgrund dieser Maßnahmen wird der Durchsatz des Leergutes durch einen Rücknahmeautomaten wesentlich erhöht.

Erfindungsgemäß ist die Transporteinheit mit einer Anlagefläche für das Leergut ausgestattet. Um diese Anlagefläche laufen Trums, insbesondere Kettentrums, um, an denen im Abstand voneinander angeordnete Rollen drehbar gelagert sind, die als Mitnehmer für das Leergut fungieren. Der Drehantrieb des auf den Rollen liegenden Leerguts kann auf einfache Weise durch Reibschluss der relativ zur Anlagefläche translatorisch bewegten Rollen mit der Anlagefläche erreicht werden, die sich dadurch drehen und einen Drehimpuls auf das Leergut übertragen. Ebenfalls denkbar ist ein Drehantrieb der Rollen durch Formschluss zwischen Rollen und Unterlage, indem die Unterlage beidseitig zahnstangenartige Bereiche aufweist, mit denen drehfest mit den Rollen kämmende Zahnräder kämmen.

In einer weiteren Ausführungsform der Erfindung stehen die Rollen über die Anlagefläche beidseitig über und liegen in diesen Überstandsbereichen zum Drehantrieb unter Reibschluss oder Formschluss an Schienen an, die, bezogen auf die Anlagefläche, auf der gegenüber liegenden Seite der Trums angeordnet sind. Dadurch wird die Drehrichtung der Rollen und damit auch des Leerguts gegenüber der vorstehend beschriebenen Ausführung umgekehrt, woraus in vorteilhafter Weise eine Verkürzung der Höhe des Detektionsfeldes der Erkennungseinheit resultiert. Eine weitere Verkürzung der Höhe des Detektionsfeldes der Erkennungseinheit kann bei dieser Ausführungsform dadurch realisiert werden, dass der Durchmesser der Rollen (bzw. bei Formschluss der Zahnräder) in den beiden Überstandsbereichen kleiner als in dem Mitnehmerbereich ist, wobei unter Mitnehmerbereich der Bereich der Rollen zu verstehen ist, auf dem das Leergut aufliegt. Durch diese Maßnahme wird die Umfangsgeschwindigkeit des Leerguts erhöht.

Gegenüber der oben zuerst beschriebenen Ausführungsform kann in einer nicht beanspruchten Ausführungsform eine Verkürzung des Detektionsfeldes der Erkennungseinheit auch dadurch erreicht werden, dass die Rollen über die Anlagefläche beidseitig überstehen und in diesen Überstandsbereichen zum Drehantrieb unter Reibschluss oder Formschluss an Schienen anliegen, die, bezogen auf die Trums auf der Seite der Anlagefläche angeordnet sind, wobei der Durchmesser der Rollen (bzw. bei Formschluss der Zahnräder) in den Überstandsbereichen kleiner ist als in dem Mitnehmerbereich des Leerguts. Bei dieser Ausführung hat das Leergut die gleiche Drehrichtung wie bei der ersten Ausführungsform aber eine größere Umfangsgeschwindigkeit.

Es hat sich als vorteilhaft herausgestellt, wenn die Rollen sich abwechselnde Abschnitte größeren und kleineren Durchmessers aufweisen, wobei das Leergut auf Abschnitten größeren Durchmessers aufliegt. Die Mitnahme des Leerguts ist dann störungsfreier, insbesondere kann sich das Leergut bei dieser Gestaltung der Rollen nicht zwischen diesen und der Anlagefläche verkeilen.

Der Drehantrieb des Leerguts kann in einer weiteren, nicht beanspruchten Ausführungsform der Erfindung auch dadurch erfolgen, dass in die Anlagefläche für das Leergut Antriebsrollen oder Antriebsgurte eingelassen sind. In diesem Falle können die Mitnehmer z.B. als Leisten ausgeführt sein.

Erfindungsgemäß ist die Transporteinrichtung als Steilförderer, insbesondere mit einem Anstellwinkel α von 60° bis 85°, ausgeführt. Dadurch wird zum Einen die Bautiefe eines Rücknahmeautomaten verringert. Zum Anderen hat sich gezeigt, dass in dem angegebenen Anstellwinkelbereich verhindert wird, dass auf einem Mitnehmer mehrere Stücke Leergut aufeinander liegend transportiert werden, da die überzähligen Stücke Leergut in den Eingaberaum zurück fallen.

Die Erfindung wird nachstehend anhand von Ausführungsbeispielen näher erläutert. In der dazugehörigen Zeichnung zeigt in schematischer Weise:
- Fig. 1: eine Vorderansicht einer erfindungsgemäßen Transporteinrichtung in einer ersten Ausführungsform der Erfindung,
- Fig. 2: eine Seitenansicht gemäß Fig. 1,
- Fig. 3: eine vergrößerte Einzelheit A gemäß Fig. 2, und
- Fig. 4: eine perspektivische Ansicht der Transporteinrichtung mit eingezeichnetem Detektionsfeld einer zu einer Erkennungseinheit gehörenden Kamera,
- Fig. 5: eine zweite Ausführungsform der Erfindung in einer Darstellung gemäß Fig. 3,
- Fig. 6: eine Draufsicht auf die Darstellung gemäß Fig. 5,
- Fig. 7: eine nicht beanspruchte Ausführungsform der Erfindung in einer Darstellung gemäß Fig. 3, und
- Fig. 8: eine Draufsicht auf die Darstellung gemäß Fig. 7.

Die schematische Zeichnung zeigt einen Steilförderer 1 eines ansonsten nicht weiter dargestellten Leergut-Rücknahmeautomaten. Der Anstellwinkel α des Steilförderers 1 liegt bei diesem Ausführungsbeispiel in einem Bereich von 60° bis 85°. Er weist auf seinen beiden Längsseiten umlaufende Kettentriebe 2, 3 auf, an denen quer zur Förderrichtung angeordnete Rollen 4 drehbar gelagert sind. Die Rollen 4 sind in gleichmäßigen Abständen auf den Umfang verteilt an den Kettentrieben 2 und 3 gelagert und weisen sich abwechselnde Abschnitte 5, 6 kleineren und größeren Durchmessers auf. Die Rollen 4 laufen zumindest am Obertrum der Kettentriebe 2 und 3 auf einer starren ortsfesten Anlagefläche 7, wodurch sie durch Reibschluss drehangetrieben werden.

Der Anstellwinkel α des Steilförderers kann maximal 90° betragen. In diesem Falle müßten die Rollen 4 einen Durchmesser haben der größer als der größte Durchmesser des zu fördernden Leergutes 10 ist.

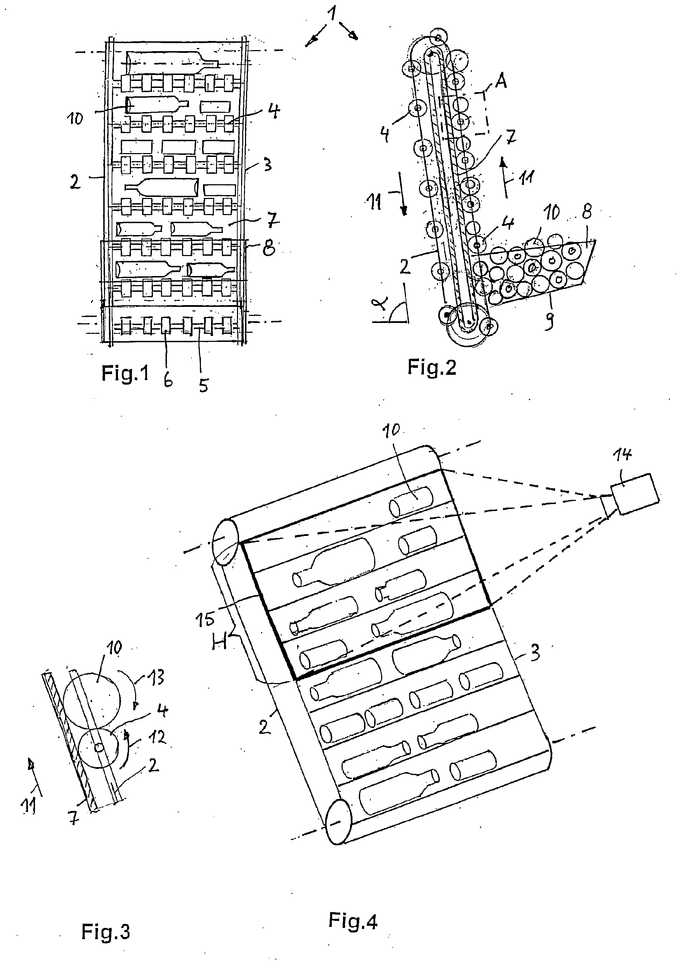

Am unteren Ende des Steilförderers 1 ist ein nach oben offener, trichterförmiger Eingaberaum 8 angeordnet. Der Boden 9 des Eingaberaums 8 verläuft zum Steilförderer 1 hin nach unten geneigt. In den Eingaberaum 8 wird Leergut 10 in Form von Dosen und Flaschen durch Ausschütten, z. B. aus einer Tasche, gewissermaßen als Schüttgut, eingegeben. Aufgrund der Neigung des Bodens 9 ist eine Triebkraft vorhanden, die das Leergut 10 zum Steilförderer 1 hin rollen bzw. rutschen lässt. Die Rollen 4 des Steilförderers 1 durchlaufen den Eingaberaum 8, wodurch Leergut 10, auf Abschnitten 6 größeren Durchmessers der Rollen 4 aufliegend mitgenommen wird. Die Rollen 4 sind so breit, dass mindestens zwei Stück Leergut 10 auf einer Rolle 4 zum Liegen kommen können, wie aus Figur 1 hervorgeht.

Der Steilförderer 1 fördert das Leergut 10 aus dem Eingaberaum 8 heraus nach oben. Die Förderrichtung ist in den Figur 2 und 3 durch Pfeile 11 dargestellt. Da die Rollen 4 auf der Anlagefläche 7 abrollen, erhalten sie einen Drehantrieb in Gegenuhrzeigerrichtung, wie in Figur 3 durch einen Pfeil 12 dargestellt ist. Das auf den Rollen 4 lagernde Leergut 10 wird dadurch in Uhrzeigerrichtung angetrieben, wie in Figur 3 durch einen Pfeil 13 angedeutet. Aufgrund dieser Drehrichtung wird das Leergut 10 an die Anlagefläche 7 gedrückt, so dass es nicht von den Rollen 4 herunterfallen kann. Am oberen Ende des Steilförderers 1 wird das Leergut 10 dann an nicht dargestellte, nachfolgende Einrichtungen des Rücknahmeautomaten übergeben.

Der Steilförderer 1 führt das Leergut 10 an einer zu einer Erkennungseinheit gehörenden Kamera 14 vorbei, wie in Figur 4, in der der Eingaberaum 8 und die Rollen 4 weggelassen wurden, dargestellt ist. Die Kamera 14 hat ein flächenhaftes Detektionsfeld 15. Dieses Detektionsfeld 15 umfasst die ganze Breite des Steilförderers 1 und die Höhe H des Detektionsfeldes 15 ist so gewählt, dass sie mindestens der abgerollten Mantelfläche des Leerguts 10 mit dem größten Durchmesser entspricht. Dadurch wird erreicht, dass alle auf der Mantelfläche eines Stück Leerguts 10 befindlichen Kennzeichen, Barcodes oder sonstige bildliche Merkmale sicher erfasst werden können. Die Kamera 14 ist mit entsprechender Funktionsbeleuchtung unter einem bestimmten Winkel und in einem definierten Abstand über dem Steilförderer 1 angeordnet und kann somit während des Aufwärtstransports des rotierenden Leerguts 10 alle auf dessem Umfang vorhandenen Zeichen etc. optoelektronisch in Echtzeit erfassen. Zusätzlich kann durch eine Kameraeinheit die Gesamtanordnung überwacht werden und deren Aufnahmen für gezielte Servicemaßnahmen genutzt werden.

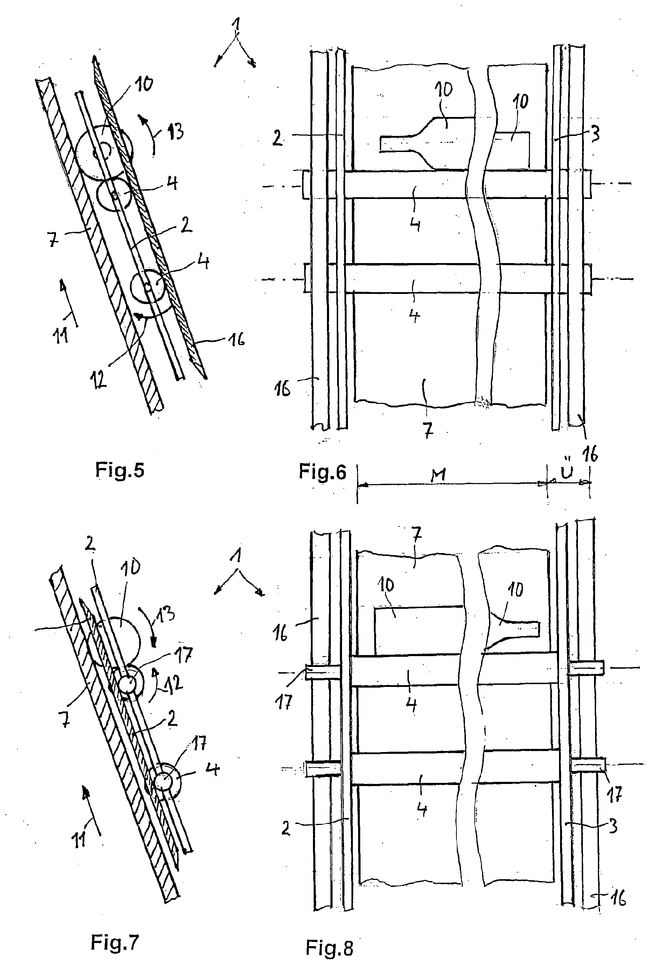

In den Figuren 5 und 6 ist eine zweite Ausführungsform der vorliegenden Erfindung dargestellt. In diesen Figuren werden für gleiche Bauteile die Bezugszeichen des ersten Ausführungsbeispiels übernommen. Der Steilförderer 1 entspricht in seinem prinzipiellen Aufbau dem des ersten Ausführungsbeispiels. Er weist also eine ortsfeste starre Anlagefläche 7 für das Leergut 10, einen Eingaberaum 8 und als Mitnehmer fungierende Rollen 4 auf, die in um die Anlagefläche 7 umlaufenden Kettentrieben 2, 3 drehbar gelagert sind. Im Unterschied zum ersten Ausführungsbeispiel, laufen die Rollen 4 nicht auf der Anlagefläche 7 ab, sondern sie stehen beidseitig über die Anlagefläche 7 über und laufen in den dadurch gebildeten Überstandsbereichen Ü mit Reibschluss auf beidseitig von der Anlagefläche 7 ortsfest und auf der gegenüber liegenden Seite der Kettentriebe 2, 3 angeordneten Schienen 16. Auf Grund dieser Anordnung drehen sich die Rollen 4 in Uhrzeigerrichtung und auf ihnen liegendes Leergut 10 dem entsprechend in Gegenuhrzeigerrichtung. Diese Drehrichtung hat in Verbindung mit der translatorischen Förderung des Leergutes 10 und der damit verbundenen Änderung des "Blickwinkels" der Kamera den Vorteil, das sich das Leergut 10 zur vollständigen Erfassung von auf seiner Mantelfläche befindlichen Barcodes und/oder sonstiger Kennzeichen nicht mehr vollständig drehen muß, d.h., die Höhe H des Detektionsfeldes 15 der Kamera 14 ist im Vergleich mit der Lösung gemäß dem ersten Ausführungsbeispiel in vorteilhafter Weise reduziert.

In den Figuren 7 und 8 ist ein weiteres nicht beanspruchtes Ausführungsbeispiel der vorliegenden Erfindung gezeigt. Im Unterschied zu dem zuvor erläuterten, zweiten Ausführungsbeispiel sind hier die Schienen 16, bezogen auf die Kettentriebe 2 und 3 auf der Seite der Anlagefläche 7 angeordnet. Die Rollen 4 weisen ebenfalls wieder Überstandsbereiche Ü auf und besitzen hier zapfenförmige Verlängerungen 17, die einen kleineren Durchmesser haben als die Rollen 4 im Mitnehmerbereich M. Mit diesen Verlängerungen 17 laufen die Rollen 4, abgehoben von der Anlagefläche 7 für das Leergut 10, unter Reibschluss auf den Schienen 16 ab. Die Rollen 4 haben hier die gleiche Drehrichtung wie beim ersten Ausführungsbeispiel, dem gegenüber aber auf Grund der "Übersetzung" eine höhere Umfangsgeschwindigkeit. Im Resultat verkürzt sich auch hier die Höhe H des Detektionsfeldes 15.

## Patentansprüche

1. Vorrichtung zur Rücknahme von Leergut, insbesondere Flaschen und Dosen, aufweisend einen Eingaberaum (8) zur Eingabe des Leerguts (10) als Schüttgut (Bulk-Eingabe), eine als Steilförderer ausgebildete Transporteinrichtung (1), die das Leergut (10) aus dem Eingaberaum (8) heraus in Förderrichtung gesehen der Reihe nach übereinander und gleichzeitig auch nebeneinander (Feldanordnung) an einer Erkennungseinheit (14) vorbeiführt, wobei die Transporteinrichtung (1) mehrere quer zur Transportrichtung angeordnete und parallel voneinander beabstandete Mitnehmer (4) zur Aufnahme des Leerguts (10) aufweist, und jeder Mitnehmer (4) so breit ausgeführt ist, dass er mindestens zwei Stücke Leergut (10), deren Längsachsen parallel zu den Mitnehmern (4) ausgerichtet sind, nebeneinander aufnehmen kann, und wobei die Transporteinrichtung (1) eine Anlagefläche (7) für das Leergut (10) aufweist, und die Mitnehmer (4) aus Rollen gebildet sind, die beidseitig an um die Anlagefläche (7) umlaufenden Kettentrieben (2, 3) drehbar gelagert sind und wobei der Drehantrieb der Rollen (4) durch Reibschluss oder Formschluss mit der Anlagefläche (7) oder mit außen neben den Kettentrieben (2, 3) ortsfest angeordneten Schienen (16) erfolgt und das auf den Mitnehmern (4) aufliegende Leergut (10) mindestens im Detektionsfeld (15) der Erkennungseinheit (14) um seine Längsachse drehangetrieben ist, und wobei das Detektionsfeld (15) die ganze Breite des Steilförderers (1) umfasst und die Höhe (H) des Detektionsfeldes (15) so gewählt ist, dass sie mindestens der abgerollten Mantelfläche des Leerguts mit dem größten Durchmesser entspricht.

2. Transporteinrichtung nach Anspruch 1, **dadurch gekennzeichnet, dass** die Rollen (4) über die Anlagefläche (7) beidseitig überstehen und in diesen Überstandsbereichen (Ü) zum Drehantrieb unter Reibschluss oder Formschluss an den Schienen (16) anliegen, die, bezogen auf die Anlagefläche (7), auf der gegenüber liegenden Seite der Kettentriebe (2, 3) angeordnet sind.

3. Transporteinrichtung nach Anspruch 2, **dadurch gekennzeichnet, dass** der Durchmesser der Rollen (4) in den Überstandsbereichen (Ü) kleiner ist als in dem Mitnehmerbereich (M) des Leerguts (10).

4. Transporteinrichtung nach einem der vorstehenden Ansprüche 1 bis 3, **dadurch gekennzeichnet, dass** die Rollen (4) aus sich abwechselnden Abschnitten (5, 6) kleineren und größeren Durchmessers bestehen, wobei das Leergut (10) auf den Abschnitten (6) größeren Durchmessers aufliegt.

5. Transporteinrichtung nach einem der vorstehenden Ansprüche, **dadurch gekennzeichnet, dass** sie als Steilförderer (1), insbesondere mit einem Anstellwinkel α von 60° bis 85°, ausgeführt ist.

## Claims

1. Reverse vending machine accepting empties, in particular bottles and cans, comprising a receiving chamber (8) for feeding in empties (10) as bulk material (bulk feed), a transport apparatus designed as a steep conveyor (1) transporting the empties (10) out of the receiving chamber (8) sequentially on top of each other seen in transport direction and simultaneously also next to each other (field array) past a detection unit (14), with the transport apparatus (1) having several carriers (4) that are arranged diagonally to the transport apparatus and spaced in parallel from each other for taking up the empties (10), and each carrier (4) being designed with a width so that it can take up two pieces of empties (10) next to each other with their longitudinal axes being aligned in parallel to the carriers (4) and wherein
the transport apparatus (1) has a contact surface (7) for the empties (10) and the carriers (4) comprise rollers that are arranged rotatable on both sides on chain drives (2, 3) revolving around the contact surface (7) and with the rotary drive of the rollers (4) occurs upon a frictional connection or positive locking with the contact surface (7) or stationary rails (16) arranged next to the chain drives (2, 3) and the empties (10) placed on the carriers (4) are rotated around their longitudinal axis by the rotary drive at least within the detection field (15) of the detection unit (14) and wherein the detection field (15) covers the entire width of the steep conveyor (1) and with the height (H) of the detection field (15) being chosen so that it is at least equal the rolled out skin surface of empty with the largest diameter.

2. Transport apparatus according to claim 1, **characterised in that** the rollers (4) protrude on both sides over the contact surface (7), and these, by frictional connection or positive locking in these areas of protrusion (Ü) from the rotary drive, contact the rails (16) that are arranged on the opposite side of the chain drives (2, 3) relative to the contact surface (7).

3. Transport apparatus according to claim 2, **characterised in that** the diameter of the rollers (4) is smaller in the areas of protrusion (Ü) than in the area of the carriers (M) of the empties (10).

4. Transport apparatus according to any one of the preceding claims 1 to 3, **characterised in that** the rollers (4) comprise alternating sections (5, 6) with smaller and larger diameters, with the empties (10) lying on the sections (6) that have the larger diameter.

5. Transport apparatus according to any one of the preceding claims, **characterised in that** it is designed as a steep conveyor (1), in particular with a pitch of 60° to 85°.

## Revendications

1. Dispositif de reprise des vides, en particulier de bouteilles et de boîtes, le dispositif présentant un réceptacle de collecte (8) pour l'introduction des vides (10) sous forme d'un produit en vrac (introduction en vrac), un dispositif de transport (1) conçu comme une chaîne transporteuse à forte pente qui extrait les vides du réceptacle de collecte (8) et les fait passer vu dans le sens de transport, tour à tour, de manière superposée et en même temps juxtaposée (configuration de réseau) devant une unité de reconnaissance (14), le dispositif de transport (1) présentant plusieurs organes d'entraînement (4) disposés de façon transversale au sens de transport et écartée parallèlement les uns des autres pour recevoir les vides (10), et chaque organe d'entraînement (4) étant conçu aussi large qu'il puisse recevoir au moins deux vides (10) juxtaposés, dont les axes longitudinaux sont orientés parallèles aux organes d'entraînement (4), le dispositif de transport (1) présentant une surface d'appui (7) pour les vides (10), et les organes d'entraînement (4) étant formés de galets qui sont logés rotatifs, sur les deux côtés des transmissions par chaînes (2, 3) rotatives autour de la surface d'appui (7), l'entraînement en rotation des galets (4) ayant lieu par liaison à friction ou complémentarité de formes avec la surface d'appui (7) ou avec des rails disposés stationnaires à l'extérieur, à côté des transmissions par chaînes (2, 3), et les vides (10), qui reposent sur les organes d'entraînement (4), étant entraînés en rotation autour de leurs axes longitudinaux au moins dans la zone de détection (15) de l'unité de reconnaissance (14), et la zone de détection (15) comprend toute la largeur de la chaîne transporteuse à forte pente et la hauteur (H) de la zone de détection (15) étant choisie de sorte qu'elle corresponde au moins à la surface latérale déroulée du vide ayant le plus grand diamètre.

2. Dispositif de transport suivant la revendication 1, **caractérisé en ce que** les galets (4) sont en saillie de part et d'autre de la surface d'appui (7) et que pour l'entraînement en rotation par liaison à friction ou complémentarité de formes, elles s'appuient, dans cette zone de saillie (Ü), sur les rails (16) qui sont, par rapport à la surface d'appui (7), disposés sur le côté opposé des transmissions par chaînes (2, 3).

3. Dispositif de transport suivant la revendication 2, **caractérisé en ce que** le diamètre des galets (4) est plus petit dans les zones de saillie (Ü) que dans la zone des organes d'entraînement (M) des vides (10).

4. Dispositif de transport suivant une des revendications 1 à 3, **caractérisé en ce que** les galets (4) sont constitués de sections (5, 6) alternantes à diamètre plus petit et plus grand, les vides (10) reposant sur les sections (6) à diamètre plus grand.

5. Dispositif de transport suivant une des revendications précédentes, **caractérisé en ce qu'**il est conçu comme chaîne transporteuse à forte pente (1), en particulier avec un angle d'inclinaison α de 60° à 85°.
